# EUROPÄISCHE PATENTSCHRIFT

(11) **EP 1 877 288 B1**
(45) Veröffentlichungstag und Bekanntmachung des Hinweises auf die Patenterteilung: **25.02.2009**
(21) Anmeldenummer: 06805443.6
(22) Anmeldetag: 12.10.2006
(51) Int. Cl.: B60R 21/276

(54) **AIRBAGMODUL FÜR EIN KRAFTFAHRZEUG**
AIRBAG MODULE FOR A MOTOR VEHICLE
MODULE AIRBAG POUR VEHICULE AUTOMOBILE

(30) Priorität: 17.10.2005 DE 202005016457 U
(43) Veröffentlichungstag der Anmeldung: 16.01.2008
(73) Patentinhaber: Takata-Petri AG, 63743 Aschaffenburg (DE)
(72) Erfinder: MEISSNER, Dirk, 13467 Berlin (DE); HEYM, Axel, 13156 Berlin (DE); PRADEL, Andreas, 10318 Berlin (DE); LUBE, Thomas, 12589 Berlin (DE); SCHLIECKER, Gudrun, 10967 Berlin (DE)
(74) Vertreter: Baumgärtel, Gunnar
(86) Internationale Anmeldenummer: PCT/DE2006/001840
(87) Internationale Veröffentlichungsnummer: WO 2007/045227

(56) Entgegenhaltungen:
- EP-A1- 0 620 140
- DE-A1- 19 602 695
- US-A- 5 564 738

## Beschreibung

Die Erfindung betrifft ein Airbagmodul nach dem Oberbegriff des Anspruchs 1, bei dem ausströmendes Gas beim Verlassen des Moduls abgekühlt wird.

Ein solches Modul umfasst einen Gassack, der sich zum Schutz einer Person aufblasen lässt, mindestens eine Ausströmöffnung, durch die Gas, das zumindest teilweise aus dem aufgeblasenen Gassack stammt, aus dem Modul abgelassen werden kann, und ein Reservoir mit einem Kühlmittel, das zum Abkühlen des ausströmenden Gases verwendet wird.

Bei einem Unfall wird der Gassack eines Airbagmoduls mit Gas aufgeblasen, welches von einem Gasgenerator freigesetzt wird und bei Verwendung eines Heißgasgenerators eine hohe Temperatur besitzt. Das anschließende Ablassen von heißem Gas aus dem Airbagmodul (insbesondere aus dem Gassack) ist bei hohen Temperaturen des Gases mit einem Verletzungsrisiko für Personen, die mit dem Gas in Berührung kommen können, verbunden. Darüber hinaus können Teile der Fahrzeuginneneinrichtung durch heißes Gas beschädigt werden. Im Unterschied dazu lässt sich abgekühltes Gas aufgrund seines geringeren beanspruchten Volumens deutlich einfacher in einen hierfür vorgesehenen, zumindest teilweise umschlossenen Raum leiten, als das mit nicht abgekühltem Gas möglich ist. Es wird daher auf verschiedenen Wegen versucht, Gas abzukühlen, bevor es das Airbagmodul verlässt.

Aus der EP 0 620 140 A1 ist bekannt, aus einem Gassack ausströmendes Gas über Stahl- oder Aluminiumwolle zu leiten, wodurch das Gas sich dabei unter Erwärmung der Metallwolle abkühlt. Der Nachteil dieses Verfahrens besteht in der begrenzten zur Verfügung stehenden Wärmekapazität des zur Gasabkühlung eingesetzten Materials.

Aus der DE 196 02 695 C2 ist ein Gasgenerator bekannt, in dem das zum Befüllen eines Gassacks erzeugte Gas vor dem Befüllen des Gassacks durch den direkten Kontakt mit einer Flüssigkeit abgekühlt werden kann. Dazu wird ein aus nicht hitzebeständigem Material geformter Kühlkörper verwendet, der mit einer Kühlflüssigkeit und mit Silikonschaumgummi gefüllt ist. Beim Kontakt des heißen Gases mit dem Material des Kühlkörpers wird das Material zerstört und die Kühlflüssigkeit freigesetzt. Das Silikonschaumgummi hat dabei die Aufgabe, die zur Verfügung stehende Oberfläche des Kühlmittels zu erhöhen. Bei diesem Gasgenerator wird allerdings aufgrund des Volumenverlusts infolge der Abkühlung des Gases verhältnismäßig mehr Gas für die Befüllung des Gassacks benötigt wird.

Der Erfindung liegt das Problem zugrunde, eine schnelle und effektive Abkühlung von Gas beim Ablassen des Gases aus einem Airbagmodul zu ermöglichen, auch wenn das Gas zuvor zum Aufblasen eines Gassackes in diesen eingeleitet worden war.

Dieses Problem wird durch ein Airbagmodul mit den Merkmalen des Anspruchs 1 gelöst.

Danach wird das aus dem Airbagmodul abzulassende Gas zu einem Reservoir geleitet, das mit einem Kühlmittel gefüllt ist. Dabei umschließt eine Begrenzungswand des Reservoirs das Kühlmittel allseitig dicht, so dass kein Kühlmittel aus dem Reservoir austreten kann, solange die Begrenzungswand des Reservoirs intakt und verschlossen ist. Diese Begrenzungswand ist so gestaltet, dass sie geöffnet werden kann, um einen direkten Kontakt zwischen dem Kühlmittel und dem abzukühlenden Gas zu ermöglichen.

Damit wird das erfindungsgemäße Problem auf vorteilhafte Weise gelöst, da die Temperatur des aus dem Gassack strömenden Gases durch den direkten Kontakt des Gases mit dem Kühlmittel schnell und durch den verhältnismäßig niedrigen Bedarf an Kühlmittel effizient gesenkt werden kann.

In einer bevorzugten Ausführungsform der Erfindung befinden sich die Ausströmöffnungen, durch die das Gas abgelassen wird, im Gasgeneratorträger. Alternativ können sich diese Ausströmöffnungen auch an der Bodenseite des Airbagmoduls befinden, an der auch eine Führungsplatte mit einer großen Öffnung, welche die Ausströmöffnungen im Airbagmodul rahmenartig umschließt, befestigt ist. Eine solche Führungsplatte dient nicht direkt als Gasgeneratorträger, wird aber beispielsweise in einem Beifahrerairbagmodul - ähnlich dem Gasgeneratorträger in einem Fahrerairbagmodul - dazu verwendet, bestimmte Elemente des Airbagmoduls wie beispielsweise einen Ventilschieber zu führen und Öffnungen zum Ablassen von Gas sowie ggf. eine Vorrichtung zum Befestigen eines pyrotechnischen Elements oder Gewinde zum Befestigen von weiteren Elementen an der Führungsplatte aufzunehmen. Eine solche Führungsplatte ist dabei an das Gehäuse des Airbagmoduls angebracht und bildet auf diese Weise einen Bestandteil des Airbagmoduls.

Die Erfindung wird bevorzugt so ausgestaltet, dass sich das Kühlmittelreservoir im Strömungsweg des abzulassenden Gases befindet und dabei vor den Ausströmöffnungen des Airbagmoduls liegt. Alternativ kann das Kühlmittelreservoir im Strömungsweg des abzulassenden Gases hinter den Ausströmöffnungen des Airbagmoduls angeordnet sein.

Bevorzugt umschließt die Begrenzungswand des Kühlmittelreservoirs einen Hohlraum oder mehrere Hohlräume, in dem oder in denen sich das Kühlmittel befindet. Die Begrenzungswand des Kühlmittelreservoirs ist vorzugsweise aus Kunststoff gefertigt.

In einer bevorzugten Ausführungsform der Erfindung wird das Kühlmittelreservoir so gestaltet, dass es eine flache Grundform, beispielsweise die eines scheibenförmigen Rings oder Quaders, aufweist. Der Begriff "flach" soll hier so verstanden werden, dass die Ausdehungen des Reservoirs in Länge und Breite größer sind als seine Ausdehnung in die Höhe und sich Länge und Breite des Reservoirs im Wesentlichen in einer Ebene erstrecken.

Es sind sowohl Varianten der Erfindung mit einem festen als auch mit einem flüssigen Kühlmittel realisierbar. Durch die Vielzahl der zur Verfügung stehenden Substanzen ist somit eine Abkühlung von Gasen mit Temperaturen aus einem weiten Bereich möglich. Als Kühlmittel eignet sich beispielsweise Wasser. Da das Reservoir nur mit Kühlmittel, nicht aber mit Hilfssubstanzen gefüllt sein muss, ist eine einfache und unkomplizierte Herstellung eines solchen Reservoirs realisierbar.

In einer bevorzugten Ausführungsform der Erfindung besitzt das Kühlmittel einen Sublimations-, Verdampfungs- oder anderen Phasenübergangspunkt im Bereich solcher Temperaturen, die das abzukühlende Gas aufweist. Dadurch kommt es beim direkten oder indirekten Kontakt des abzukühlenden Gases mit dem kühlmittelgefüllten Reservoir zu einer hohen Energieaufnahme durch das Kühlmittel im Verlauf seines Phasenübergangs. Die hohe Verdampfungs-, Sublimations-, oder sonstige Phasenübergangsenthalpie des Kühlmittels, die zulasten der Temperatur des Gases aufgebracht wird, führt somit zu einer effektiven Abkühlung des Gases. Im Vergleich mit einem Kühlmittel, das keinen Phasenübergang im entsprechenden Temperaturbereich aufweist, kann man durch Ausnutzung der Phasenübergangsenthalpie des Kühlmittels weitaus weniger Kühlmittel einsetzen, um eine vergleichbare Abkühlung des Airbaggases zu erreichen. Dies steigert die Effizienz des Abkühlungsprozesses.

Der Phasenübergang des Kühlmittels ist dabei vorzugsweise ein Übergang in die gasförmige Phase, um eine möglichst große Volumenzunahme des Kühlmittels zu erreichen.

Die mit dem Phasenübergang des Kühlmittels einhergehende Volumenänderung führt zu einem starken Anstieg des Drucks innerhalb des Reservoirs. Bevorzugt führt dies allein oder in Kombination mit dem durch den vom ausströmenden Gas ausgeübten Druck auf das Reservoir und/oder mit der von dem heißen Gas ausgehenden thermischen Belastung des Reservoirs zu einer Öffnung der Begrenzungswand des Reservoirs. Dadurch wird Kühlmittel sowohl in seinem ursprünglichen als auch in seinem neuen Aggregatzustand freigesetzt. Durch den direkten Kontakt des abzukühlenden Gases mit dem freigesetzten Kühlmittel kommt es zu einer noch effektiveren Energieübertragung vom Gas auf das Kühlmittel als es durch den indirekten Kontakt möglich war, da die Kontaktoberfläche zwischen Gas und Kühlmittel signifikant erhöht wird.

In einer Variante der Erfindung wird das Reservoir nicht in erster Linie durch den inneren Druck, der durch das verdampfende oder sublimierende Kühlmittel verursacht wird, sondern vor allem durch den vom ausströmenden Gas auf das Reservoir ausgeübten Druck geöffnet und so ein direkter Kontakt zwischen Gas und Kühlmittel ermöglicht.

In einer weiteren Variante befindet sich eine (speziell dem Kühlmittelreservoir zugeordnete, separate) pyrotechnische Einheit dicht am Kühlmittelreservoir, die nach ihrer Aktivierung durch den von ihr aufgebrachten Druck (ggf. indirekt über ein von der pyrotechnischen Einheit aktiviertes Kraftübertragungselement) eine Öffnung der Begrenzungswand des Kühlmittelreservoirs bewirkt.

Vorzugsweise ist die Begrenzungswand des Reservoirs so gestaltet, dass sie auf einen Überdruck, der entweder von innen oder von außen auf die Begrenzungswand wirkt, ggf. in Kombination mit einer thermischen Belastung durch ein Aufbrechen oder Aufplatzen reagiert bzw. durch einen vergleichbaren Vorgang, der mit einer Zerstörung der Begrenzungswand des Reservoirs einhergeht. Hierzu kann die Begrenzungswand zumindest eine Sollbruchstelle aufweisen, die zum erleichterten Aufbrechen der Begrenzungswand an dieser Stelle führt. Eine solche Sollbruchstelle ist beispielsweise in Form einer Perforation oder einer Schwächungslinie bzw. einer vergleichbaren Schwächung ausgeführt.

In einer Variante der Erfindung kann das Airbagmodul so gestaltet sein, dass die Ausströmöffnungen des Moduls dauerhaft geöffnet sind und damit ein andauerndes Ausströmen von Gas aus dem Gassack bzw. dem Modul ermöglichen. Das heißt, dass - je nach den Druckverhältnissen von Gassack und Umgebung - bereits während des Befüllens des Gassacks ein Teil des Airbaggases aus dem Gassack bzw. dem Modul ausströmen und auf das Kühlmittelreservoir treffen kann.

In einer anderen Variante der Erfindung wird das Ausströmen von Gas aus dem Modul durch zumindest ein steuerbares Ventil geregelt. Eine solche Regelung kann durch ein Verschlusselement wie beispielsweise durch einen Ventilschieber, wie in DE 103.61 887 A1 beschrieben, erfolgen. Dabei wird eine ringförmige Stellscheibe als Verschlusselement durch den von einem pyrotechnischen Element aufgebrachten Druck in eine begrenzte rotatorische Bewegung versetzt. In der Ausgangsstellung fluchten die Ausströmöffnungen der Stellscheibe, die in Form und Anzahl identisch sind mit denen des über der Stellscheibe liegenden Ventilgrundkörpers, nicht mit diesen Ausströmöffnungen des Ventilgrundkörpers; das Verschlusselement ist geschlossen. Durch die begrenzte rotatorische Bewegung wird die Stellscheibe in eine solche Position gebracht, dass ihre Ausströmöffnungen mit denen des Ventilgrundkörpers fluchten; das Verschlusselement ist geöffnet. Eine solche Anordnung bietet sich vor allem dann an, wenn das Airbagmodul in einem Lenkrad untergebracht sein soll und infolge dessen eine zylinderförmige Form aufweisen soll. Darüber hinaus kann eine solche Regelung des Gasstroms aber auch dann zu Einsatz kommen, wenn das Airbagmodul eine quaderförmige Grundform aufweisen soll, weil es beispielsweise auf der Beifahrerseite eines Fahrzeugs eingesetzt werden soll. In diesem Fall führt ein äquivalenter Ventilschieber eine vergleichbare begrenzte translatorische Bewegung relativ zu einer Führungsplatte aus. Die für diese Bewegung erforderliche Energie kann äquivalent zur oben beschriebenen rotatorischen Bewegung durch ein pyrotechnisches Element bereitgestellt werden.

In einer Variante der Erfindung ist das Verschlusselement so gestaltet, dass es Vorsprünge auf der dem Kühlmittelreservoir zugewandten Seite ausbildet. Bei der begrenzten rotatorischen oder translatorischen Bewegung des Verschlusselements zur Öffnung der Abströmöffnungen des Airbagmoduls kommen diese Vorsprünge dabei in Kontakt mit der Begrenzungswand des Kühlmittelreservoirs. Dabei können sie entweder eine Sollbruchstelle in der Begrenzungswand des Kühlmittelreservoirs erzeugen (in Form eines Anrisses oder einer Perforation) oder aber das Kühlmittelreservoir direkt aufreißen, indem sie die Begrenzungswand zerstören. Das aus dem Gassack strömende Gas kommt auf diese Weise noch schneller in direkten Kontakt mit dem Kühlmittel. Darüber hinaus kann so auch der Zeitraum, den das Gas zum Ausströmen aus dem Airbagmodul benötigt, verkürzt werden.

Alternativ kann vorgesehen sein, dass sich vermittels des Überdrucks von innen oder von außen auf die Begrenzungswand des Reservoirs eine Öffnungsvorrichtung wie beispielsweise ein Ventil oder eine Klappe reversibel öffnet und das Kühlmittel freisetzt, so dass es zu einem direkten Kontakt zwischen Kühlmittel und Gas kommt. In diesem Fall wird die Begrenzungswand des Kühlmittelreservoirs bei der Öffnung des Reservoirs nicht zerstört, sondern ist nach einem Schließen der Öffnungsvorrichtung wieder intakt.

Bevorzugt wird das aus dem Modul ausströmende Gas in ein hierfür vorgesehenes, teilweise oder ganz umschlossenes Behältnis geleitet. Durch die niedrige Temperatur des Gases benötigt es ein vergleichsweise kleineres Volumen als ein nicht abgekühltes Gas. Die Verwendung eines teilweisen oder ganz umschlossenen Behältnisses minimiert das Verletzungsrisiko zusätzlich. Auch können Schäden an der Fahrzeuginneneinrichtung durch die niedrigere Gastemperatur und die Verwendung eines solchen Behältnisses vermindert oder ausgeschlossen werden.

In einer bevorzugten Ausführungsform der Erfindung wird das Kühlmittelreservoir mit einem Träger (beispielsweise in Form einer Trägerplatte) versehen und mit diesem durch Befestigungselemente wie Schrauben so an eine Airbageinrichtung angebracht, dass Träger und Reservoir fest miteinander und fest mit einem geeigneten aufnehmenden Teil im Airbagmodul verbunden sind. Sie können beispielsweise zwischen dem Gasgeneratorträger und dem Flansch des Gasgenerators fixiert werden. Zu diesem Zweck haben sowohl der Träger als auch das Kühlmittelreservoir kreisförmige Aussparungen, die miteinander fluchten und deckungsgleich mit den Gewinden im Gasgeneratorträger sind, in die die Schrauben geschraubt werden. Alternativ oder zusätzlich zur Verschraubung sind ebenso Klemmung, Verklebung, Verschweißung und ähnliche Verfahren zum Befestigen von Träger und Kühlmittelreservoir an das Airbagmodul möglich. Ebenso können Träger und Kühlmittelreservoir miteinander durch Klemmung, Verklebung, Verschweißung und ähnliche Verfahren zum Befestigen verbunden werden. Der Träger dient zur Stabilisierung des Kühlmittelreservoirs und ermöglicht durch diese Stabilitätsvermittlung eine große Bandbreite von Materialien, aus denen das Kühlmittelreservoir gefertigt sein kann. Der Träger selbst ist vorzugsweise aus Kunststoff hergestellt. Der Träger und das Kühlmittelreservoir bilden durch ihre Verbindung eine Kühleinheit.

Der Träger und das Kühlmittelreservoir können jeweils eine solche Form aufweisen, dass sie in verschieden geformte Airbagmodule eingepasst werden können. So können Träger und Reservoir beispielsweise eine ringförmige Grundform aufweisen, um sich in ein Airbagmodul, das beispielsweise für den Einsatz in einem Lenkrad oder einem ähnlich geformten Gehäuse konzipiert wurde, integrieren zu lassen. Darüber hinaus kann das Kühlmittelreservoir beispielsweise auch die Form eines geöffneten. Rings haben, während der Träger zwar die Form eines geschlossenen Rings besitzen, aber im Bereich der Öffnung des Kühlmittelreservoirs über eine Aussparung verfügt. Durch diese Unterbrechungen der vollständig geschlossenen Ringe können Träger und Kühlmittelreservoir in solche Airbagmodule integriert werden, die mit einer pyrotechnischen Einheit zum Erzeugen von Druck für das Bewegen eines Ventilschiebers ausgestattet sind. Ferner können Trägerplatte und Kühlmittelreservoir jeweils eine quaderförmige Form besitzen und sich somit beispielsweise in ein Airbagmodul integrieren lassen, das für den Einsatz an einem Beifahrerplatz in einem Kraftfahrzeug oder den Einsatz in einem beliebigen anderen quaderförmigen Gehäuse konzipiert wurde.

Wenn der Träger zwischen den Ausströmöffnungen des Gasgeneratorträgers oder des Ventilgrundkörpers und dem Kühlmittelreservoir angeordnet ist, dann strömt das aus dem Modul abzulassende Gas erst durch die Ausströmöffnungen des Generatorträgers oder des Ventilgrundkörpers, anschließend durch die Durchlässe des Trägers und trifft dann auf das Kühlmittelreservoir. Bei Verwendung eines Beifahrerairbagmoduls, bei dem sich die Ausströmöffnungen des Moduls nicht im Gasgeneratorträger, sondern an der Bodenseite des Airbagmoduls befinden, führt die gleiche Positionierung von Trägerplatte und Kühlmittelreservoir dazu, dass das aus dem Modul abzulassende Gas aus dem Gassack zuerst auf das Kühlmittelreservoir trifft und nach Passieren des Reservoirs durch die Durchlässe der Trägerplatte und die Ausströmöffnungen der Airbagmoduls aus dem Modul strömt.

Bevorzugt wird die Erfindung so ausgeführt, dass der Träger über zumindest einen Durchlass verfügt, damit die Airbaggase aus dem Airbagmodul treten können. Form und Anzahl der Durchlässe sind dabei identisch mit denen der Ausströmöffnungen des Airbagmoduls (insbesondere mit denen des Gasgeneratorträgers bzw. des Ventilgrundkörpers oder den in die Bodenseite des Airbagmoduls eingelassenen Ausströmöffnungen). Vorzugsweise sind der Durchlass bzw. die Durchlässe des Trägers mit der Ausströmöffnung bzw. den Ausströmöffnungen des Airbagmoduls deckungsgleich, so dass der Gasausstrom aus dem Modul durch den Träger nicht behindert wird.

Bei Verwendung eines zylinderförmigen. Airbagmoduls kann eine Adapterplatte an dem Modul mit geeigneten Befestigungselementen, beispielsweise Schrauben, befestigt werden. Diese Adapterplatte dient einerseits dazu, Kühlmittelreservoir und Trägerplatte auf deren jeweiligen radialen Außenseiten durch Klemmung zu stabitisieren. Daher kann die Adapterplatte als optionaler Bestandteil der Kühleinheit angesehen werden.
Andererseits vermittelt bzw. ermöglicht die Adapterplatte die Integration des Airbagmoduls in ein dafür konzipiertes Lenkrad oder einen anderen Aufnahmeraum in einem Kraftfahrzeug.

Weitere Vorteile und Einzelheiten der Erfindung sollen anhand von Zeichnungen näher erläutert werden. Es zeigen:
- Fig. 1: eine Explosionsdarstellung einer ringförmigen Kühleinheit sowie eine Darstellung eines passenden Topfairbagmoduls ohne Kühleinheit mit ständig geöffneten Ausströmöffnungen,
- Fig. 2: ein ringförmiges Kühlmittelreservoir und eine Trägerplatte,
- Fig. 3: eine Explosionsdarstellung einer Kühleinheit in Form eines geöffneten Rings sowie eine Darstellung eines passenden Topfairbagmoduls ohne Kühleinheit mit Ausströmöffnungen, deren Öffnung mittels steuerbarer Ventile geregelt werden kann,
- Fig. 4: eine quaderförmige Kühleinheit und ein passendes Airbagmodul ohne Kühleinheit mit Ausströmöffnungen, deren Öffnung mittels steuerbarer Ventile geregelt werden kann,
- Fig. 5: eine Explosionsdarstellung einer quaderförmigen Kühleinheit sowie
- Fig. 6: eine quaderförmige Kühleinheit.

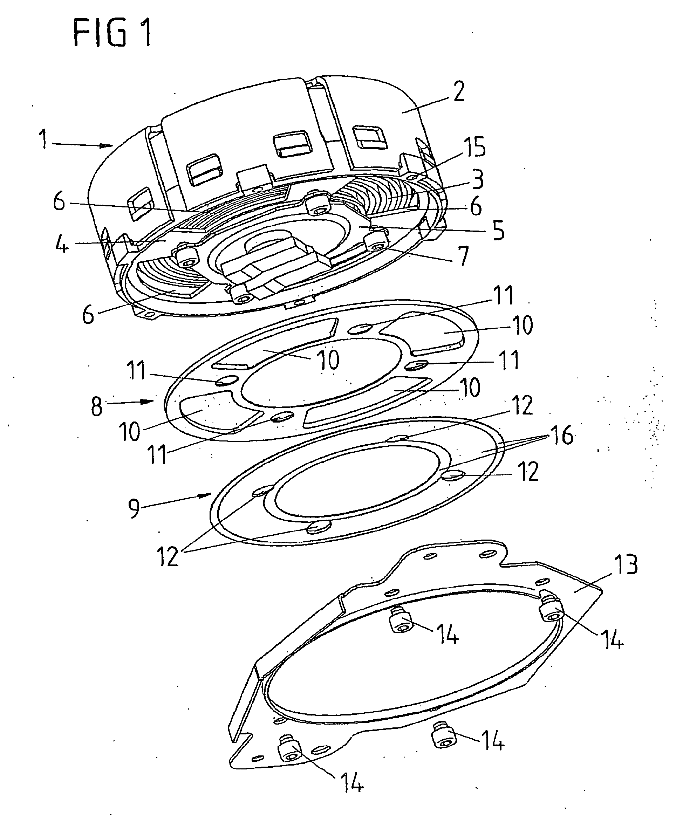

Figur 1 zeigt ein zylinderförmiges, Airbagmodul 1 (Fahrer- bzw. Topfairbagmodul) mit einer Modulabdeckung 2, einem aufblasbaren Gassack 3, einem Gasgeneratorträger 4 und einem Gasgeneratorflansch 5. Ein Gasgenerator, der als Heißgasgenerator das zum Füllen des Gassacks benötigte. Gas durch einen chemischen Prozess bereitstellt, liegt im Innern des Moduls 1 und ist üben den . Gasgeneratorflansch 5 mit dem Gasgeneratorträger 4 fest mittels Befestigungsschrauben 7 verbunden. Das Modul 1 verfügt über vier ständig geöffnete Ausströmöffnungen 6, die in den Gasgeneratorträger 4 eingelassen sind. Durch diese Ausströmöffnungen 6 kann Gas, das sich zuvor im Gassack 3 befunden hat, kontinuierlich aus dem Modul 1 ausströmen. Mittels der Schrauben 7 werden eine flache ringförmige Trägerplatte 8, die über jeweils vier gleichmäßig verteilte Durchlässe 10 und kreisförmige Öffnungen 11 verfügt, und ein flaches ringförmiges Kühlmittelreservoir 9, das eine einen Hohlraum umschließende Begrenzungswand 16 und vier kreisförmige Öffnungen 12 besitzt, so zwischen dem Gasgeneratorflansch 5 und dem Gasgeneratorträger 4 befestigt, dass sich die Trägerplatte 8 auf der Seite des Gasgeneratorträgers 4 und das Kühlmittelreservoir 9 auf der Seite des Gasgeneratorflansches 5 befinden. Dabei dienen die kreisförmigen Öffnungen 11 in der Trägerplatte 8 ebenso wie die deckungsgleichen kreisförmigen Öffnungen 12 im Kühlmittelreservoir 9 zum Durchgreifen der Befestigungsschrauben 7, die in Gewinden im Gasgeneratorträger 4 verschraubt werden. Die vier Durchlässe 10 der Trägerplatte 8 fluchten mit den Ausströmöffnungen 6 des Gasgeneratorträgers 4, so dass das aus dem Modul 1 ausströmende Gas ungehindert auf das Kühlmittelreservoir 9 treffen kann. Mittels einer Adapterplatte 13, die über eine große kreisförmige Öffnung verfügt, deren Radius um so viel kleiner als der Außenradius der Trägerplatte 8 und des Kühlmittelreservoirs 9 ist, dass sie nach ihrer Befestigung mit den Schrauben 14 in entsprechenden Gewinden 15 im Modul 1 eine effektive Klemmung im radial äußeren Bereich von Trägerplatte 8 und Kühlmittelreservoir 9 vermittelt, lässt sich das gesamte Airbagmodul 1 mit integrierter Trägerplatte 8 und integriertem Kühlmittelreservoir 9 in einem für die Aufnahme eines Airbagmoduls konzipierten Lenkrad befestigen.

Im Folgenden soll anhand der Figur 1 kurz die Funktionsweise der erfindungsgemäßen Abkühlung des heißen Gases beim Ausströmen aus dem Gassack erläutert werden:
Das durch die Ausströmöffnungen 6 und Durchlässe 10 austretende Gas trifft auf das Kühlmittelreservoir 9, das eine einen Hohlraum umschließende Begrenzungswand 16 hat und in seinem Innern mit Kühlmittel gefüllt ist. Als Kühlmittel kann beispielsweise Wasser verwendet werden. Durch das heiße Gas wird das Kühlmittel erwärmt und geht in den gasförmigen Zustand über, wodurch sich der Druck im Innern des Kühlmittelreservoirs 9 erhöht. Das Kühlmittelreservoir 9 ist dabei so gestaltet, dass seine Begrenzungswand 16 durch den erhöhten Druck aufbricht und das Kühlmittel freisetzt, so dass es zu einem direkten Kontakt zwischen Gas und Kühlmittel kommt. Durch diesen direkten Kontakt zwischen Gas und Kühlmittel wird die Effektivität des Abkühlvorgangs signifikant erhöht.

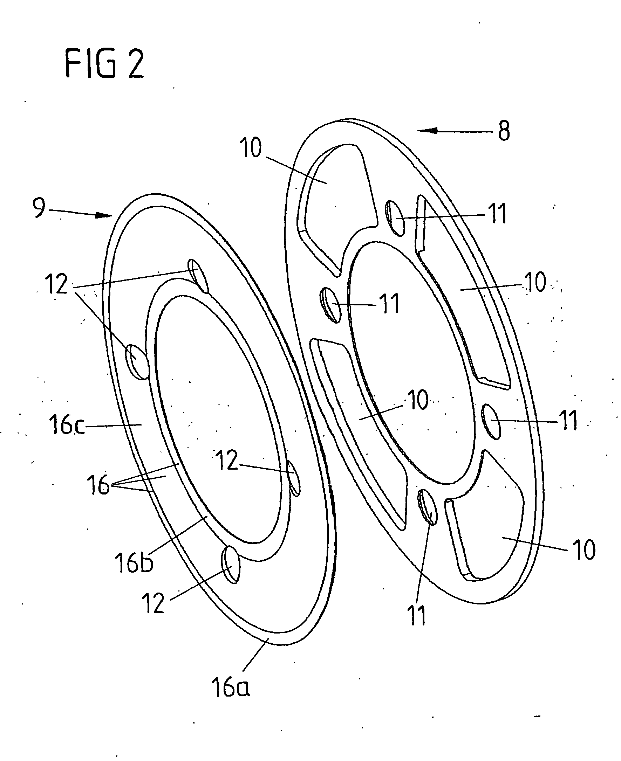

Figur 2 zeigt eine vergrößerte Darstellung der flachen ringförmigen Trägerplatte 8 und dem flachen ringförmigen Kühlmittelreservoir 9 aus Fig. 1. Im äußeren ringförmigen Bereich 16a und im inneren ringförmigen Bereich 16b der Begrenzungswand 16 des Kühlmittelreservoirs 9 liegen zwei Kunststoffschichten der Begrenzungswand 16 direkt übereinander, ohne einen Hohlraum zu bilden. Nur im mittleren ringförmigen Bereich 16c der Begrenzungswand 16 wird ein Hohlraum gebildet, der mit Kühlmittel gefüllt ist. Die kreisförmigen Öffnungen 11 in der Trägerplatte 8 dienen ebenso wie die kreisförmigen Öffnungen 12 im Kühlmittelreservoir 9 als Durchlass für Befestigungsschrauben. Die vier Ausströmöffnungen 10 in der Trägerplatte 8 ermöglichen einen Gasstrom aus dem Airbagmodul zum Kühlmittelreservoir 9. Sie sind gleichermaßen gestaltet wie die Ausströmöffnungen 6 des Gasgeneratorträgers 4 aus Fig. 1 und fluchten mit diesen nach Montage von Trägerplatte 8 und Kühlmittelreservoir 9 im Airbagmodul 1 (vgl. Fig. 1). Dadurch übt die Trägerplatte 8 keinen zusätzlichen Widerstand auf den Gasstrom aus dem Gassack 3 im Modul 1 aus (vgl. Fig. 1).

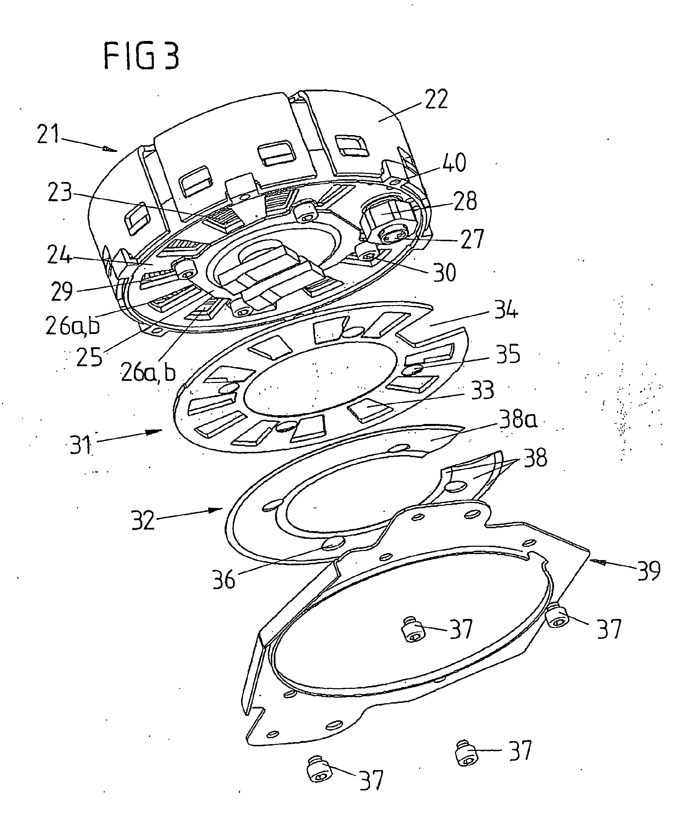

Figur 3 zeigt ein zylinderförmiges Airbagmodul 21 (Fahrer- bzw. Topfairbagmodul) mit einer Modulabdeckung 22, einem aufblasbaren Gassack 23, einem Ventilgrundkörper 24 und einem Gasgeneratorflansch 25. Ein Gasgenerator liegt im Innern des Moduls 21 und wird über den Gasgeneratorflansch 25 mittels Befestigungsschrauben 30 mit dem Ventilgrundkörper 24 verbunden. Der Ventilgrundkörper 24 fungiert folglich als Gasgeneratorträger; er stellt eine Sonderform eines Gasgeneratorträgers dar. Der Ventilgrundkörper 24 verfügt über eine Vielzahl von verschließbaren Ausströmöffnungen 26a, durch die Gas, das sich zuvor im Gassack 23 befunden hat, aus dem Modul 21 ausströmen kann, wenn sie geöffnet sind. Es wurden nur zwei der Ausströmöffnungen 26a stellvertretend für alle gekennzeichnet. Das Öffnen der anfangs geschlossenen Ausströmöffnungen 26a geschieht mittels eines pyrotechnischen Elements 27, das durch eine Überwurfmutter 28 an einer Ausformung des Ventilgrundkörpers 24 befestigt ist, nach dessen Aktivierung durch ein externes Signal. Durch diese Aktivierung vermag das pyrotechnische Element 27 mittels einer Druckerhöhung in einem Druckraum des Ventilgrundkörpers 24 eine-zwischen Ventilgrundkörper 24 und Gassack 23 liegende, flache ringförmige Stellscheibe 29, die über gleich viele und gleich geformte Ausströmöffnungen 26b verfügt wie der Ventilgrundkörper 24 über Ausströmöffnungen 26a, begrenzt rotatorisch zu bewegen. Es wurden nur zwei der Ausströmöffnungen 26b stellvertretend für alle gekennzeichnet. Durch die begrenzte rotatorische Bewegung der Stellscheibe 29 bewegen sich deren Ausströmöffnungen 26b in eine solche Position, dass sie mit den Ausströmöffnungen 26a des Ventilgrundkörpers 24 fluchten (wie in Fig. 3 gezeigt) und für eine Öffnung der Ausströmöffnungen 26a sorgen.

Mittels der Schrauben 30 werden eine flache Trägerplatte 31, die die Grundform eines geschlossenen Ringes besitzt, aber über eine vom äußeren Rand der Platte zur Innenseite ragende Aussparung 34 verfügt, die weniger als die vollständige Breite der Trägerplatte 31 umfasst, so dass die ringförmige Grundform der Trägerplatte 31 nicht vollständig unterbrochen wird, und ein flaches Kühlmittelreservoir 32 mit der Grundform eines offenen Rings so zwischen dem Gasgeneratorflansch 25 und dem Ventilgrundkörper 24 befestigt, dass sich die Trägerplatte 31 auf der Seite des Ventilgrundkörpers 24 und das Kühlmittelreservoir 32 auf der Seite des Gasgeneratorflansches 25 befinden. Die Ringöffnung des Kühlmittelreservoirs 32 wird dabei so über der Aussparung 34 der Trägerplatte 31 positioniert, dass das pyrotechnische Element 27 weder die Trägerplatte 31 noch das Kühlmittelreservoir 32 berührt. Die Trägerplatte 31 verfügt über ebenso viele sowie gleichermaßen geformte und angeordnete Durchlässe 33 wie der Ventilgrundkörper über Ausströmöffnungen 26a und die Stellscheibe 29 über Ausströmöffnungen 26b verfügt. In Fig. 3 ist exemplarisch ein Durchlass 33 stellvertretend für die anderen gekennzeichnet. Die Befestigung der Trägerplatte 31 erfolgt dabei so am Ventilgrundkörper 24, dass die Durchlässe 33 mit den Ausströmöffnungen 26a fluchten. Dadurch kann das aus dem Modul ausströmende Gas ungehindert auf das Kühlmittelreservoir 32 treffen, sofern die Ausströmöffnungen 26a deckungsgleich mit den Ausströmöffnungen 26b sind und nicht von der Stellscheibe 29 verschlossen werden. In der Trägerplatte 31 befinden sich ferner kreisförmige Öffnungen 35, von denen nur eine stellvertretend für die anderen gleichermaßen geformten Öffnungen gekennzeichnet ist, die ebenso wie im Kühlmittelreservoir 32 befindliche kreisförmige Öffnungen 36, von denen ebenfalls nur eine stellvertretend für die anderen gleichermaßen geformten Öffnungen gekennzeichnet ist, als Durchlass für die Befestigungsschrauben 30 dienen.

Das Kühlmittelreservoir 32 besitzt eine einen Hohlraum umschließende Begrenzungswand 38. Äquivalent zu den Ausführungen bei der Beschreibung zu Fig. 2, befindet sich der Hohlraum im mittleren Bereich 38ä des offenen Rings und ist mit Kühlmittel gefüllt. Das Kühlmittelreservoir 32 unterscheidet sich vom Kühlmittelreservoir 9 aus den Fig. 1 und 2 nur dadurch, dass es nicht die Form eines geschlossenen Rings besitzt, sondern die eines offenen Rings.

Mittels einer Adapterplatte 30, die über eine große kreisförmige Öffnung verfügt, deren Radius um so viel kleiner als der Außenradius der Trägerplatte 31 und des Kühlmittelreservoirs 32 ist, dass sie nach ihrer Befestigung mit den Schrauben 37 in entsprechenden Gewinden 40 im Modul 21 eine effektive Klemmung im radial äußeren Bereich von Trägerplatte 31 und Kühlmittelreservoir 32 vermittelt, lässt sich das gesamte Airbagmodul 21 mit integrierter Trägerplatte 31 und integriertem Kühlmittelreservoir 32 in einem für die Aufnahme eines Airbagmoduls konzipierten Lenkrad befestigen.

Der generelle Kühlmechanismus einer Anordnung, wie sie in Fig. 3 gezeigt wird, unterscheidet sich nicht von dem Mechanismus einer Anordnung, wie sie in Fig. 1 gezeigt wurde. Der Unterschied beider Anordnungen beruht darin, dass der Gasausstrom aus dem Modul 1 in Fig. 1 ständig erfolgt, während er beim Modul 21 in Fig. 3 durch die Stellscheibe 29 in Abhängigkeit von verschiedenen Parametern freigegeben werden kann.

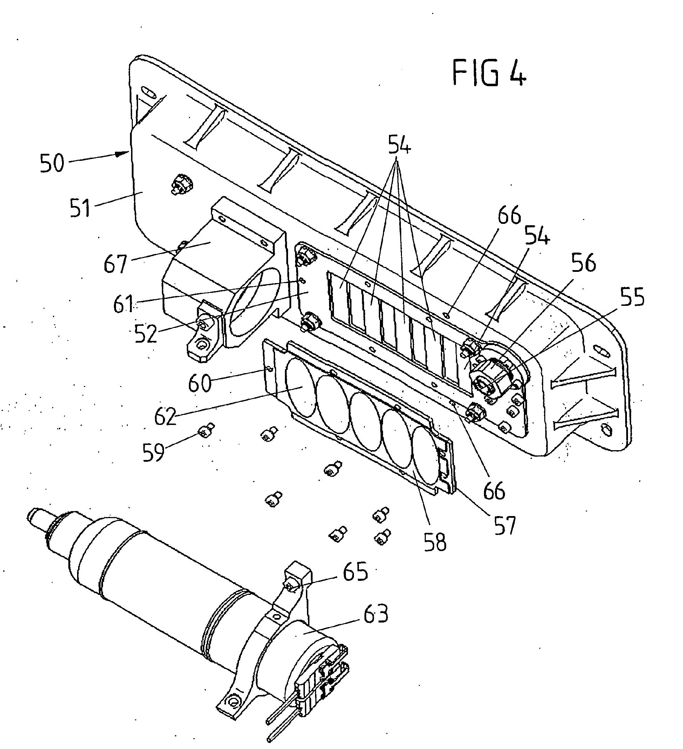

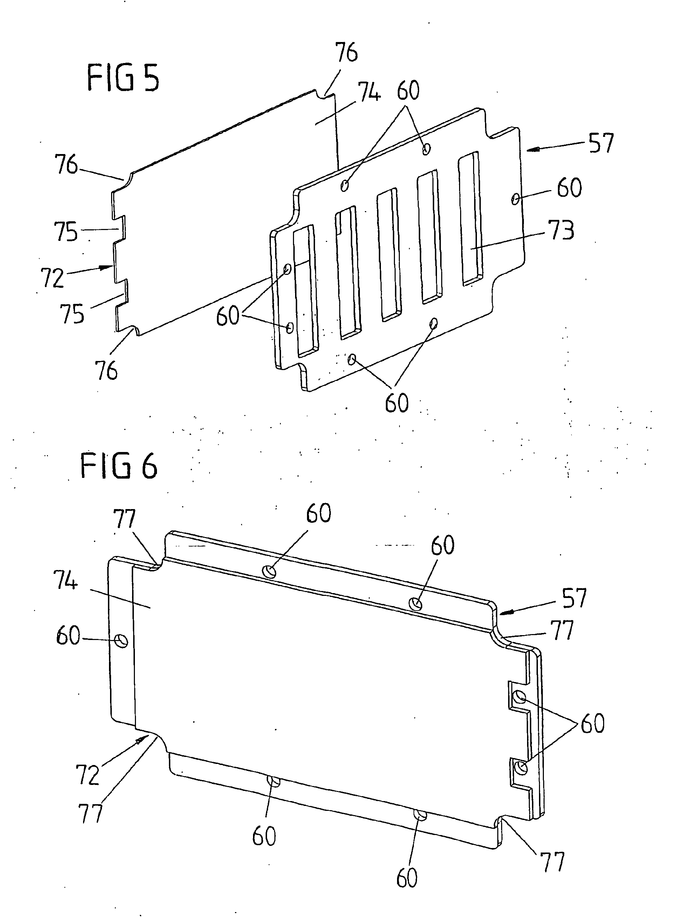

Figur 4 zeigt ein quaderförmiges Airbagmodul 50 (Beifahrerairbagmodul) mit einem Modulgehäuse 51, das an seiner Bodenseite mit mehreren Ausströmöffnungen und einer diese umgebende rahmenartigen Führungsplatte 52 versehen ist, welche über eine große zentrale Öffnung und mehrere Gewinde 61 verfügt. Es ist nur ein Gewinde 61 stellvertretend für alle gekennzeichnet. Die Ausströmöffnungen in der Bodenseite des Modulgehäuses 51 sind in Fig. 4 nicht sichtbar, sondern werden von Stegen 54 eines beweglichen Ventilschiebers verdeckt, der zwischen den Ausströmöffnungen und der Führungsplatte 52 angebracht ist. Liegen die Stege 54 des Ventilschiebers, wie in Fig. 4 gezeigt, über den Ausströmöffnungen in der Bodenseite des Modulgehäuses 51, sind die Ausströmöffnungen verschlossen. Sie können mittels eines pyrotechnischen Elements 55, das durch eine Überwurfmutter 56 an einer Ausformung der Führungsplatte 52 befestigt ist, geöffnet werden. Dazu wird das pyrotechnische Element 55 durch ein externes Signal aktiviert. Nach dieser Aktivierung vermag das pyrotechnische Element 55 durch eine Druckerhöhung in einem Druckraum den Ventilschieber begrenzet translatorisch zu bewegen. Dadurch bewegen sich die Stege 54 des Ventilschiebers in eine solche Position, dass sie die Ausströmöffnungen nicht mehr verdecken und diese damit geöffnet werden. Eine Trägerplatte 57, die eine quaderförmige Grundform mit nach innern abgerundeten Ecken sowie kreisförmige Aussparungen 60 besitzt und in Fig. 5 eingehen beschrieben wird, und ein Kühlmittelreservoir 58, das über eine Begrenzungswand verfügt, die mehrere mit Kühlmittel gefüllte Hohlräume 62 umschließt, sind fest miteinander verbunden (z. B. verklebt oder verschweißt). Durch Schrauben 59 und vermittels der Aussparungen 60, die als Durchgriff für die Schrauben 59 dienen, sowie Gewinden 61 in der Führungsplatte 52 werden das Kühlmittelreservoir 58 und die Trägerplatte 57 fest mit der Führungsplatte 52 verbunden. Von Schrauben 59, kreisförmigen Aussparungen 60 in der Trägerplatte 57, Gewinden 61 in der Führungsplatte 52 und Hohlräumen 62 im Kühlmittelreservoir 58 sind jeweils nur einzelne Exemplare stellvertretend für alle abgebildeten gekennzeichnet. Ein Gasgenerator 63, der zum Erzeugen von Gas dient, mit dem ein nicht dargestellter Gassack gefüllt wird, ist vor der Einheit aus Kühlmittelreservoir 58 und Trägerplatte 59 angebracht und durch Schrauben 65 in Gewinden 66 am Modulgehäuse 51 befestigt. Zusätzlich erfolgt eine Fixierung des Gasgenerators durch eine ringförmig gestaltete Stützeinheit 67, die am Modulgehäuse 51 angebracht ist und gleichzeitig der Einleitung der aus dem Gasgenerator austretenden Gase in den Gassack dient. Gas, das aus dem Modulgehäuse 51 strömen soll, trifft bei einer Anwendung gemäß Fig. 4 nach dem Ausströmen aus dem Gassack zuerst das Kühlmittelreservoir 58 und erwärmt das in den Hohlräumen 62 befindliche Kühlmittel, das infolge der Erwärmung in die gasförmige Phase übergeht und die Begrenzungswand des Kühlmittelreservoirs 58 zum Platzen bringt. Jeder Ausströmöffnung in der Bodenseite des Modulgehäuses 51 ist ein mit Kühlmittel gefüllter Hohlraum 62 des Reservoirs 58 zugeordnet. Durch den direkten Kontakt zwischen Gas und Kühlmittel kommt es zu einer effizienten Abkühlung des aus dem Gassack geströmten Gases, welches das Airbagmodul dann durch die geöffneten Ausströmöffnungen in der Bodenseite des Modulgehäuses 51 verlässt.

Fig. 5 und Fig. 6 zeigen eine Explosionsdarstellung (Fig. 5) und eine gewöhnliche Darstellung (Fig. 6) einer quaderförmigen Kühleinheit, wie sie in einem Beifahrerairbagmodul gemäß Fig. 4 zur Anwendung kommen kann, bestehend aus einem quaderförmigen Kühlmittelreservoir 72, welches über eine einen Hohlraum umschließende Begrenzungswand 74.verfügt, und einer quaderförmigen Trägerplatte 57, die zur Stabilisierung und Befestigung des Kühlmittelreservoirs 72 an der in Fig. 4. gezeigten Führungsplatte 52 dient. Gegenüber einem idealen Quader weist das Kühlmittelreservoir 72 an einer seiner Schmalseiten zwei Aussparungen 75, auf, die im Bereich von zwei für die Befestigung der Trägerplatte 57 an der in Fig. 4 gezeigten Führungsplatte 52 notwendigen Öffnungen 60 liegen. Darüber hinaus weisen das Kühlmittelreservoir 72 und die Trägerplatte 57 nach innen abgerundete Ecken 76 bzw. 77: auf, die miteinander fluchten, wenn das Kühlmittelreservoir 72 und die Trägerplatte 57 fest miteinander verbunden sind. Die Begrenzungswand 74 des Reservoirs 72 umschließt einen durchgängigen Hohlraum, der im Innern mit einem Kühlmittel gefüllt ist, welches im Bereich der Temperaturen der Airbaggase verdampft. Als Kühlmittel kann beispielsweise Wasser verwendet werden. Der beim Verdampfen verursachte Volumenzuwachs des Kühlmittels führt zu einem stark ansteigenden Druck im Reservoir 72, durch den die Begrenzungswand 74 des Reservoirs 72 platzen kann, wodurch es zu einem direkten Kontakt zwischen den Airbaggasen und dem im Kühlmittelreservoir 72 befindlichen Kühlmittel kommt. Im Gegensatz zu dem in Fig. 4 gezeigten Kühlmittelreservoir 58 weist das in den Fig. 5 und 6 dargestellte Kühlmittelreservoir 72 keine einzelnen voneinander getrennten Kammern bzw. Hohlräume auf, sondern verfügt über einen einzigen durchgängigen Hohlraum, der mit dem Kühlmittel gefüllt ist. Zum Einsatz in dem in Fig. 4 abgebildeten Airbagmodul kann sowohl ein Kühlmittelreservoir 58 mit voneinander getrennten Hohlräumen 62 (vgl. Fig. 4) als auch ein Reservoir 72 mit einem durchgehenden Hohlraum kommen. Die Trägerplatte 57 verfügt über mehrere Ausströmöffnungen 73, von denen eine stellvertretend für alle in Fig. 5 gekennzeichnet ist. Diese Ausströmöffnungen 73 sind in Anzahl und Form identisch mit den Ausströmöffnungen in der Bodenseite des Modulgehäuses 51 in Fig. 4 und fluchten mit diesen nach Montage der Trägerplatte 57 auf der Führungsplatte 52 unter Zuhilfenahme der kreisförmigen Öffnungen 60, welche zum Durchgreifen der Schrauben 59 verwendet werden, und den Schrauben 59 (vgl. Fig. 4). Beim Einsatz in einem Airbagmodul sind die Trägerplatte 57 und das Kühlmittelreservoir 72 fest (z. B. durch Verkleben oder Verschweißen) miteinander verbunden, wie in Fig. 6 gezeigt. Daher ist es nicht notwendig, das Kühlmittelreservoir 72 mit kreisförmigen Öffnungen zum Durchgreifen von Schrauben oder anderen Befestigungselementen zu versehen.

## Patentansprüche

1. Airbagmodul für ein Kraftfahrzeug, mit
- einem Gassack, der zum Schutz einer Person aufblasbar ist,
- mindestens einer Ausströmöffnung zum Ablassen von zumindest teilweise aus dem aufgeblasenen Gassack stammendem Gas aus dem Modul und
- einem Reservoir mit einem darin befindlichen Kühlmittel zum Abkühlen des aus dem Modul durch die Ausströmöffnung abzulassenden Gases,
**dadurch gekennzeichnet,**
**dass** das Reservoir (9; 32; 58; 72) eine Begrenzungswand (16; 38; 74) aufweist, die das Kühlmittel allseitig dicht umschließt und die dazu eingerichtet und vorgesehen ist, zum Abkühlen des abzulassenden Gases geöffnet zu werden, so dass das Kühlmittel in direkten Kontakt mit dem abzulassenden Gas treten kann.

2. Airbagmodul gemäß Anspruch **dadurch gekennzeichnet, dass** es einen Gasgeneratorträger (4; 24) aufweist, in dem die mindestens eine Ausströmöffnung (6; 26a) vorgesehen ist.

3. Airbagmodul gemäß Anspruch 1, **dadurch gekennzeichnet, dass** es ein Modulgehäuse (51) mit einer Bodenseite aufweist, in der die mindestens eine Ausströmöffnung vorgesehen ist.

4. Airbagmodul gemäß einem der vorherigen Ansprüche, **dadurch gekennzeichnet, dass** das Kühlmittelreservoir (9; 32; 58; 72) im Strömungsweg des abzulassenden Gases vor der Ausströmöffnung des Airbagmoduls (50) liegt.

5. Airbagmodul gemäß einem der Ansprüche 1 bis 3, **dadurch gekennzeichnet, dass** das Kühlmittelreservoir (9; 32; 58; 72) im Strömungsweg des abzulassenden Gases hinter der Ausströmöffnung (6; 26a) des Airbagmoduls (1; 21) liegt.

6. Airbagmodul gemäß einem der vorherigen Ansprüche, **dadurch gekennzeichnet, dass** das Reservoir (9; 32; 58; 72) derart ausgestaltet ist, dass seine Begrenzungswand (16; 38; 74) zumindest einen Raum (62) zur Aufnahme des Kühlmittels umschließt.

7. Airbagmodul gemäß Anspruch 6, **dadurch gekennzeichnet, dass** die Begrenzungswand (16; 38; 74) des Reservoirs (9; 32; 58; 72) aus Kunststoff gefertigt ist.

8. Airbagmodul gemäß Anspruch 6 oder 7, **dadurch gekennzeichnet, dass** sich das Reservoir (9; 32; 58; 72) im Wesentlichen entlang einer Ebene erstreckt und dabei eine größere Ausdehnung parallel zu dieser Ebene besitzt als senkrecht zu ihr.

9. Airbagmodul gemäß einem der vorherigen Ansprüche, **dadurch gekennzeichnet, dass** das Kühlmittel fest oder flüssig list.

10. Airbagmodul gemäß Anspruch 9, **dadurch gekennzeichnet, dass** das Kühlmittel Wasser ist.

11. Airbagmodul gemäß einem der vorherigen Ansprüche, **dadurch gekennzeichnet, dass** das Kühlmittel so beschaffen ist, dass es beim direkten oder indirekten Kontakt mit dem abzukühlenden Gas einen Phasenübergang hat.

12. Airbagmodul gemäß Anspruch 11, **dadurch gekennzeichnet, dass** es sich beim Phasenübergang des Kühlmittels um einen Übergang in die gasförmige Phase handelt.

13. Airbagmodul gemäß Anspruch 11 oder 12, **dadurch gekennzeichnet, dass** die Begrenzungswand (16; 38; 74) des Reservoirs (9; 32; 58; 72) derart ausgestaltet ist, dass sie durch einen Überdruck des Kühlmittels infolge des Phasenübergangs geöffnet wird.

14. Airbagmodul gemäß einem der vorherigen Ansprüche, **dadurch gekennzeichnet, dass** das Reservoir (9; 32; 58; 72) einen das abzulassende Gas aufnehmenden Raum begrenzt.

15. Airbagmodul gemäß Anspruch 14, **dadurch gekennzeichnet, dass** die Begrenzungswand (16; 38; 74) des Reservoirs (9; 32; 58; 72) derart ausgestaltet ist; dass sie durch den Druck des abzulassenden Gases geöffnet wird.

16. Airbagmodul gemäß einem der vorherigen Ansprüche, **dadurch gekennzeichnet, dass** die Begrenzungswand (16; 38; 74) des Reservoirs (9; 32; 58; 72) derart ausgestaltet ist, dass sie einer thermischen Belastung durch das abzulassende Gas aufgesetzt ist.

17. Airbagmodul gemäß den Ansprüchen 13, 15 und 16, **dadurch gekennzeichnet, dass** die Begrenzungswand (16; 38; 74) des Reservoirs (9; 32; 58; 72) derart ausgestaltet ist, dass sie durch ein Zusammenwirken des Überdrucks des Kühlmittels, des Drucks des abzulassenden Gases und der von dem abzulassenden Gas ausgehenden thermischen Belastung auf das Reservoir (9; 32; 58; 72) geöffnet wird.

18. Airbagmodul gemäß einem der vorherigen Ansprüche, **dadurch gekennzeichnet, dass** die Begrenzungswand (16; 38; 74) des Reservoirs (9; 32; 58; 72) derart ausgestaltet ist, dass sie durch ein separates, sich in räumlicher Nähe zur Begrenzungswand (16; 38; 74) befindliches pyrotechnisches Element geöffnet wird.

19. Airbagmodul gemäß einem der Ansprüche 13, 15, 17 oder 18, **dadurch gekennzeichnet, dass** die Begrenzungswand (16; 38; 74) des Reservoirs (9; 32; 58; 72) derart ausgestaltet ist, dass sie durch ein Aufbrechen geöffnet wird.

20. Airbagmodul gemäß Anspruch 19, **dadurch gekennzeichnet, dass** die Begrenzungswand (16; 38; 74) des Reservoirs (9; 32; 58; 72) zumindest eine Sollbruchstelle aufweist, an der sie aufbrechen kann.

21. Airbagmodul gemäß Anspruch 20, **dadurch gekennzeichnet, dass** die Sollbruchstelle als Schwächungslinie oder Perforation ausgebildet ist.

22. Airbagmodul gemäß einem der vorherigen Ansprüche, **dadurch gekennzeichnet, dass** das Airbagmodul (1) mindestens eine dauerhaft geöffnete Ausströmöffnung (6) aufweist, durch die Gas ständig aus dem Modul abgelassen werden kann.

23. Airbagmodul gemäß einem der Ansprüche 1 bis 21, **dadurch gekennzeichnet, dass** das Airbagmodul (21; 50) mindestens eine Ausströmöffnung (26a) aufweist, die zum Ablassen von Gas aus dem Modul geöffnet wird.

24. Airbagmodul gemäß Anspruch 23, **dadurch gekennzeichnet, dass** das Airbagmodul (21; 50) derart gestaltet ist, dass das Öffnen der mindestens einen Ausströmöffnung (26a) durch die Bewegung eines Verschlusselements (29) relativ zur Ausströmöffnung (26a) des Airbagmoduls (21; 50) erfolgt.

25. Airbagmodul gemäß Anspruch 24, **dadurch gekennzeichnet, dass** das Verschlusselement (29) so gestaltet ist, dass es bei seiner Bewegung in Kontakt mit der Begrenzungswand (38; 74) des Reservoirs (32; 58; 72) tritt.

26. Airbagmodul gemäß Anspruch 25, **dadurch gekennzeichnet, dass** das Verschlusselement (29) so gestaltet ist, dass es beim Kontakt mit der Begrenzungswand (38; 74) diese zerstört.

27. Airbagmodul gemäß der Ansprüche 21 und 25, **dadurch gekennzeichnet, dass** das Verschlusselement (29) so gestaltet ist, dass es beim Kontakt mit der Begrenzungswand (38; 74) die Sollbruchstelle in der Begrenzungswand erzeugt.

28. Airbagmodul gemäß einem der Ansprüche 24 bis 27, **dadurch gekennzeichnet, dass** das Verschlusselement als Stellscheibe (29) oder als Ventilschieber ausgeführt ist.

29. Airbagmodul gemäß, einem, der Ansprüche 13, 15 oder 17, **dadurch gekennzeichnet, dass** die Begrenzungswand (16; 38; 74) des Reservoirs (9; 32; 58; 72) derart ausgestaltet ist, dass sie durch eine sich infolge des Überdrucks, Drucks oder der thermischen Belastung - reversibel entriegelnde Klappe oder ein entsprechendes Ventil geöffnet wird.

30. Airbagmodul gemäß einem der vorherigen Ansprüche, **dadurch gekennzeichnet, dass** das Airbagmodul (1; 21; 50) in Strömungsverbindung mit einem zumindest teilweise geschlossenen Raum steht, in den das aus dem Airbagmodul (1; 21; 50) ausgeströmte Gas geleitet wird.

31. Airbagmodul gemäß einem der vorherigen Ansprüche, **dadurch gekennzeichnet, dass** dem Kühlmittelreservoir (9; 32; 58; 72) ein Träger (8; 31; 57) zugeordnet ist, der mit dem Kühlmittelreservoir verbunden ist und dieses stabilisiert.

32. Airbagmodul gemäß Anspruch 31, **dadurch gekennzeichnet, dass** der Träger aus Kunststoff gefertigt ist.

33. Airbagmodul gemäß Anspruch 32, **dadurch gekennzeichnet, dass** es sich bei dem Träger um eine Trägerplatte handelt.

34. Airbagmodul gemäß einem der Ansprüche 31-33, **dadurch gekennzeichnet, dass** das Kühlmittelreservoir (9; 32; 58; 72) und der Träger (8; 31; 57) fest mit dem Airbagmodul verbunden sind.

35. Airbagmodul gemäß einem der Ansprüche 31-34, **dadurch gekennzeichnet, dass** das Kühlmittelreservoir (9; 32; 58; 72) und der Träger (8; 31; 57) solcherart gestaltet sind, dass sie ohne Verformung in verschieden geformte Airbagmodule wie beispielsweise ein Fahrer- oder ein Beifahrerairbagmodul integriert werden können.

36. Airbagmodul gemäß einem der Ansprüche 31-35, **dadurch gekennzeichnet, dass** der Träger (8; 31; 57) zwischen der Ausströmöffnung (6; 26a) des Gasgeneratorträgers (4, 24) bzw. der der Bodenseite des Airbagmoduls (50) und dem Kühlmittelreservoir (9; 32; 58; 72) angeordnet ist.

37. Airbagmodul gemäß einem der Ansprüche 31-36, **dadurch gekennzeichnet, dass** der Träger (8; 31; 57) derart ausgestaltet ist, dass er zumindest einen Durchlass (10; 33; 73) für abzulassendes Gas besitzt.

38. Airbagmodul gemäß Anspruch 37, **dadurch gekennzeichnet, dass** der Träger (8; 31; 57) im Airbagmodul (1; 21; 50) so positioniert wird, dass der Durchlass (10; 33; 73) des Trägers mit der Ausströmöffnung des Airbagmoduls fluchtet.

39. Airbagmodul gemäß einem der vorherigen Ansprüche, **dadurch gekennzeichnet, dass** es eine Adapterplatte (13; 39) aufweist, die fest mit dem Airbagmodul (1; 21) verbunden ist.

40. Airbagmodul gemäß einem der Ansprüche 31-38 und Anspruch 39, **dadurch gekennzeichnet, dass** die Adapterplatte (13; 39) das Kühlmittelreservoir (9; 32; 58; 72) und den Träger (8; 31; 57) auf ihren Außenseiten fixiert.

41. Airbagmodul gemäß Anspruch 39 oder 40, **dadurch gekennzeichnet, dass** die Adapterplatte (13; 39) zur Anordnung des Airbagmoduls (1; 21) an einen Kraftfahrzeug ausgebildet und vorgesehen ist.

## Claims

1. An airbag module for a motor vehicle, comprising
- an airbag, which may be inflated for protecting a person,
- at least one outlet opening for releasing gas, originating at least partially from the inflated airbag, out of the module and
- a reservoir with a coolant located therein for cooling the gas to be released from the module through the outlet opening, **characterized in that** the reservoir (9; 32; 58; 72) has a defining wall (16; 38; 74) which sealingly encloses the coolant on all sides and which is designed and provided to be opened for cooling the gas to be released so that the coolant may come into direct contact with the gas to be released.

2. The airbag module as claimed in claim 1,
**characterized in that** it comprises a gas generator carrier (4; 24) in which the at least one outlet opening (6; 26a) is provided.

3. The airbag module as claimed in claim 1,
**characterized in that** it comprises a module housing (51) with a bottom face in which the at least one outlet opening is provided.

4. The airbag module as claimed in one of the preceding claims, **characterized in that** the coolant reservoir (9; 32; 58; 72) is located in the flow path of the gas to be released upstream of the outlet opening of the airbag module (50).

5. The airbag module as claimed in one of claims 1 to 3, **characterized in that** the coolant reservoir (9; 32; 58; 72) is located in the flow path of the gas to be released downstream of the outlet opening (6; 26a) of the airbag module (1; 21).

6. The airbag module as claimed in one of the preceding claims, **characterized in that** the reservoir (9; 32; 58; 72) is configured such that its defining wall (16; 38; 74) encloses at least one space (62) for receiving the coolant.

7. The airbag module as claimed in claim 6,
**characterized in that** the defining wall (16; 38; 74) of the reservoir (9; 32; 58; 72) is made from plastics material.

8. The airbag module as claimed in claim 6 or 7, **characterized in that** the reservoir (9; 32; 58; 72) extends substantially in one plane and thus has a greater expansion parallel to said plane than perpendicular thereto.

9. The airbag module as claimed in one of the preceding claims, **characterized in that** the coolant is solid or liquid.

10. The airbag module as claimed in claim 9, **characterized in that** the coolant is water.

11. The airbag module as claimed in one of the preceding claims, **characterized in that** the coolant is provided such that, with direct or indirect contact with the gas to be cooled, it has a phase transition.

12. The airbag module as claimed in claim 11,
**characterized in that** the phase transition of the coolant is a transition into the gaseous phase.

13. The airbag module as claimed in claim 11 or 12, **characterized in that** the defining wall (16; 38; 74) of the reservoir (9; 32; 58; 72) is configured such that it is opened by an overpressure of the coolant as a result of the phase transition.

14. The airbag module as claimed in one of the preceding claims, **characterized in that** the reservoir (9; 32; 58; 72) defines a space receiving the gas to be released.

15. The airbag module as claimed in claim 14, **characterized in that** the defining wall (16; 38; 74) of the reservoir (9; 32; 58; 72) is configured such that it is opened by the pressure of the gas to be released.

16. The airbag module as claimed in one of the preceding claims, **characterized in that** the defining wall (16; 38; 74) of the reservoir (9; 32; 58; 72) is configured such that it is subjected to thermal loading by the gas to be released.

17. The airbag module as claimed in claims 13, 15 and 16, **characterized in that** the defining wall (16; 38; 74) of the reservoir (9; 32; 58; 72) is configured such that it is opened by a cooperation of the overpressure of the coolant, the pressure of the gas to be released and the thermal loading, originating from the gas to be released, on the reservoir (9; 32; 58; 72).

18. The airbag module as claimed in one of the preceding claims, **characterized in that** the defining wall (16; 38; 74) of the reservoir (9; 32; 58; 72) is configured such that it is opened by a separate pyrotechnic element located in the spatial vicinity of the defining wall (16; 38; 74).

19. The airbag module as claimed in one of claims 13, 15, 17 and 18, **characterized in that** the defining wall (16; 38; 74) of the reservoir (9; 32; 58; 72) is configured such that it is opened by rupturing.

20. The airbag module as claimed in claim 19,
**characterized in that** the defining wall (16; 38; 74) of the reservoir (9; 32; 58; 72) has at least one predetermined rupture point at which it is able to rupture.

21. The airbag module as claimed in claim 20, **characterized in that** the predetermined rupture point is configured as a score line or perforation.

22. The airbag module as claimed in one of the preceding claims, **characterized in that** the airbag module (1) has at least one permanently opened outlet opening (6) through which gas may be continuously released from the module.

23. The airbag module as claimed in one of claims 1 to 21, **characterized in that** the airbag module (21; 50) has at least one outlet opening (26a) which is opened to release gas from the module.

24. The airbag module as claimed in claim 23,
**characterized in that** the airbag module (21; 50) is designed such that the opening of the at least one outlet opening (26a) is carried out by the movement of a closure element (29) relative to the outlet opening (26a) of the airbag module (21; 50).

25. The airbag module as claimed in claim 24,
**characterized in that** the closure element (29) is designed such that it comes into contact with the defining wall (38; 74) of the reservoir (32; 58; 72) when moved.

26. The airbag module as claimed in claim 25,
**characterized in that** the closure element (29) is designed such that it destroys the defining wall (38; 74) upon contact with said defining wall.

27. The airbag module as claimed in claims 21 and 25, **characterized in that** the closure element (29) is designed such that upon contact with the defining wall (38; 74) it creates the predetermined rupture point in the defining wall.

28. The airbag module as claimed in one of claims 24 to 27, **characterized in that** the closure element is designed as an adjusting disk (29) or as a valve slide.

29. The airbag module as claimed in one of claims 13, 15 and 17, **characterized in that** the defining wall (16; 38; 74) of the reservoir (9; 32; 58; 72) is designed such that it is opened by a reversibly unlocking flap or a corresponding valve as a result of overpressure, pressure or the thermal loading.

30. The airbag module as claimed in one of the preceding claims, **characterized in that** the airbag module (1; 21; 50) is in flow connection with an at least partially closed space, into which the gas released from the airbag module (1; 21; 50) is conducted.

31. The airbag module as claimed in one of the preceding claims, **characterized in that** a carrier (8; 31; 57) is associated with the coolant reservoir (9; 32; 58; 72) which is connected to the coolant reservoir and stabilizes said coolant reservoir.

32. The airbag module as claimed in claim 31,
**characterized in that** the carrier is made from plastics material.

33. The airbag module as claimed in claim 32,
**characterized in that** the carrier is a carrier plate.

34. The airbag module as claimed in one of claims 31-33, **characterized in that** the coolant reservoir (9; 32; 58; 72) and the carrier (8; 31; 57) are fixedly connected to the airbag module.

35. The airbag module as claimed in one of claims 31-34, **characterized in that** the coolant reservoir (9; 32; 58; 72) and the carrier (8; 31; 57) are designed in such a manner that they may be incorporated without deformation in differently shaped airbag modules, such as for example a driver or passenger airbag module.

36. The airbag module as claimed in one of claims 31-35, **characterized in that** the carrier (8; 31; 57) is arranged between the outlet opening (6; 26a) of the gas generator carrier (4; 24) and/or that of the bottom face of the airbag module (50) and the coolant reservoir (9; 32; 58; 72).

37. The airbag module as claimed in one of claims 31-36, **characterized in that** the carrier (8; 31; 57) is designed such that it has at least one aperture (10; 33; 73) for gas to be released.

38. The airbag module as claimed in claim 37,
**characterized in that** the carrier (8; 31; 57) is positioned in the airbag module (1; 21; 50) such that the aperture (10; 33; 73) of the carrier is aligned with the outlet opening of the airbag module.

39. The airbag module as claimed in one of the preceding claims, **characterized in that** it comprises an adapter plate (13; 39) which is fixedly connected to the airbag module (1; 21).

40. The airbag module as claimed in one of claims 31-38 and claim 39, **characterized in that** the adapter plate (13; 39) fixes the coolant reservoir (9; 32; 58; 72) and the carrier (8; 31; 57) on their outer faces.

41. The airbag module as claimed in claim 39 or 40, **characterized in that** the adapter plate (13; 39) is configured and provided for arranging the airbag module (1; 21) on a motor vehicle.

## Revendications

1. Module d'airbag pour un véhicule automobile, comprenant
- un sac à gaz qui est gonflable pour la protection d'une personne,
- au moins une ouverture de sortie pour l'évacuation hors du module du gaz qui provient au moins partiellement du sac à gaz gonflé, et
- un réservoir avec un produit réfrigérant situé à l'intérieur et destiné à refroidir le gaz à évacuer hors du module à travers l'ouverture de sortie,
**caractérisé en ce que**
le réservoir (9 ; 32 ; 58 ; 72) comporte une paroi de délimitation (16 ; 38 ; 74) qui entoure de façon étanche le produit réfrigérant sur tous les côtés, et qui est prévu et conçu pour être ouverte pour refroidir le gaz à évacuer sortir de telle manière que le produit réfrigérant puisse venir en contact direct avec le gaz à évacuer.

2. Module d'airbag selon la revendication 1, **caractérisé en ce qu'**il comprend un porte générateur de gaz (4 ; 24) dans lequel est prévue ladite au moins une ouverture de sortie (6 ; 26a).

3. Module d'airbag selon la revendication 1, **caractérisé en ce qu'**il comprend un boîtier de module (51) avec un côté de fond dans lequel est prévue ladite au moins une ouverture de sortie.

4. Module d'airbag selon l'une des revendications précédentes, **caractérisé en ce que** le réservoir à produit réfrigérant (9 ; 32 ; 58 ; 72) est situé devant l'ouverture de sortie du module d'airbag (50), dans le trajet d'écoulement du gaz à évacuer.

5. Module d'airbag selon l'une des revendications 1 à 3, **caractérisé en ce que** le réservoir à produit réfrigérant (9 ; 32 ; 58 ; 72) est situé derrière l'ouverture de sortie (6 ; 26a) du module d'airbag (1 ; 21), dans le trajet d'écoulement du gaz à évacuer.

6. Module d'airbag selon l'une des revendications précédentes, **caractérisé en ce que** le réservoir (9 ; 32 ; 58 ; 72) est réalisé de telle façon que sa paroi de délimitation (16 ; 38 ; 74) entoure au moins une chambre (62) pour la réception du produit réfrigérant.

7. Module d'airbag selon la revendication 6, **caractérisé en ce que** la paroi de délimitation (16 ; 38 ; 74) du réservoir (9 ; 32 ; 58 ; 72) est réalisée en matière synthétique.

8. Module d'airbag selon la revendication 6 ou 7, **caractérisé en ce que** le réservoir (9 ; 32 ; 58 ; 72) s'étend sensiblement le long d'un plan et de là possède une extension plus importante parallèlement à ce plan que perpendiculairement à celui-ci.

9. Module d'airbag selon l'une des revendications précédentes, **caractérisé en ce que** le produit réfrigérant est solide ou liquide.

10. Module d'airbag selon la revendication 9, **caractérisée en ce que** le produit réfrigérant est de l'eau.

11. Module d'airbag selon l'une des revendications précédentes, **caractérisé en ce que** le produit réfrigérant a une propriété telle qu'il présente une transition de phase lors d'un contact direct ou indirect avec le gaz à refroidir.

12. Module d'airbag selon la revendication 11, **caractérisé en ce que** la transition de phase du produit réfrigérant est une transition vers la phase gazeuse.

13. Module d'airbag selon la revendication 11 ou 12, **caractérisé en ce que** la paroi de délimitation (16 ; 38 ; 74) du réservoir (9 ; 32 ; 58 ; 72) est réalisée de telle manière qu'elle est ouverte par une surpression du produit réfrigérant à la suite de la transition de phase.

14. Module d'airbag selon l'une des revendications précédentes, **caractérisé en ce que** le réservoir (9 ; 32 ; 58 ; 72) délimite une chambre destinée à recevoir le gaz à évacuer.

15. Module d'airbag selon la revendication 14, **caractérisé en ce que** la paroi de délimitation (16 ; 38 ; 74) du réservoir (9 ; 32 ; 58 ; 72) est réalisée de telle façon qu'elle est ouverte par la pression du gaz à évacuer.

16. Module d'airbag selon l'une des revendications précédentes, **caractérisé en ce que** la paroi de délimitation (16 ; 38 ; 74) du réservoir (9 ; 32 ; 58 ; 72) est réalisée de telle manière qu'elle est exposée à une sollicitation thermique par le gaz à évacuer.

17. Module d'airbag selon les revendications 13,15 et 16, **caractérisé en ce que** la paroi de délimitation (16 ; 38 ; 74) du réservoir (9 ; 32 ; 58 ; 72) est réalisée de telle manière qu'elle est ouverte par une coopération sur le réservoir (9 ; 32 ; 58 ; 72) de la surpression du produit réfrigérant, de la pression du gaz à évacuer et de la sollicitation thermique qui émane du gaz à évacuer.

18. Module d'airbag selon l'une des revendications précédentes, **caractérisé en ce que** la paroi de délimitation (16 ; 38 ; 74) du réservoir (9 ; 32 ; 58 ; 72) est réalisée de telle façon qu'elle est ouverte par un élément pyrotechnique séparé qui se trouve proche dans l'espace de la paroi de délimitation (16 ; 38 ; 74).

19. Module d'airbag selon l'une des revendications 13,15, 17 ou 18, **caractérisé en ce que** la paroi de délimitation (16 ; 38 ; 74) du réservoir (9 ; 32 ; 58 ; 72) est réalisée de telle façon qu'elle est ouverte par une rupture.

20. Module d'airbag selon la revendication 19, **caractérisé en ce que** la paroi de délimitation (16 ; 38 ; 74) du réservoir (9 ; 32 ; 58 ; 72) comporte au moins un emplacement de rupture de consigne au niveau duquel elle doit se rompre.

21. Module d'airbag selon la revendication 20, **caractérisé en ce que** l'emplacement de rupture de consigne est réalisé sous la forme d'une ligne d'affaiblissement ou d'une perforation.

22. Module d'airbag selon l'une des revendications précédentes, **caractérisé en ce que** le module d'airbag (1) comprend au moins une ouverture de sortie (6) ouverte durablement, à travers laquelle le gaz peut être évacué en permanence hors du module.

23. Module d'airbag selon l'une des revendications 1 à 21, **caractérisé en ce que** le module d'airbag (21 ; 50) comprend au moins une ouverture de sortie (26a) qui est ouverte pour laisser le gaz sortir hors du module.

24. Module d'airbag selon la revendication 23, **caractérisé en ce que** le module d'airbag (21 ; 50) est réalisé de telle manière que l'ouverture de ladite au moins une ouverture de sortie (26a) a lieu par le déplacement d'un élément d'obturation (29) par rapport à l'ouverture de sortie (26a) du module d'airbag (21 ; 50).

25. Module d'airbag selon la revendication 24, **caractérisé en ce que** l'élément d'obturation (29) est réalisé de telle manière que lors de son mouvement il vient en contact avec la paroi de délimitation (38 ; 74) du réservoir (32 ; 58 ; 72).

26. Module d'airbag selon la revendication 25, **caractérisé en ce que** l'élément d'obturation (29) est réalisé de telle manière que lors du contact avec la paroi de délimitation (3 8 ; 74), il détruit celle-ci.

27. Module d'airbag selon les revendications 21 et 25, **caractérisé en ce que** l'élément d'obturation (29) est réalisé de telle manière que lors du contact avec la paroi de délimitation (38 ; 74) il engendre l'emplacement de rupture de consigne dans la paroi de délimitation.

28. Module d'airbag selon l'une des revendications 24 à 27, **caractérisé en ce que** l'élément d'obturation est réalisé sous la forme d'un disque de positionnement (29) ou d'un tiroir de valve.

29. Module d'airbag selon l'une des revendications 13, 15 ou 17, **caractérisé en ce que** la paroi de délimitation (16 ; 38 ; 74) du réservoir (9 ; 32 ; 58 ; 72) est réalisée de telle façon qu'elle est ouverte par un clapet ou une soupape correspondante qui se déverrouille de façon réversible suite à la surpression, à la pression ou à la sollicitation thermique.

30. Module d'airbag selon l'une des revendications précédentes, **caractérisé en ce que** le module d'airbag (1 ; 21 ; 50) est en liaison d'écoulement avec une chambre au moins partiellement fermée dans laquelle est amené le gaz qui s'écoule hors du module d'airbag (1 ; 21; 50).

31. Module d'airbag selon l'une des revendications précédentes, **caractérisé en ce qu'**un support (8 ; 31 ; 57) est associé au réservoir de produit réfrigérant (9 ; 32 ; 58 ; 72), ce support étant relié au réservoir de produit réfrigérant et le stabilisant.

32. Module d'airbag selon la revendication 31, **caractérisé en ce que** le support est réalisé en matière synthétique.

33. Module d'airbag selon la revendication 32, **caractérisé en ce que** le support est une plaque-support.

34. Module d'airbag selon l'une des revendications 31 à 33, **caractérisé en ce que** le réservoir de produit réfrigérant (9 ; 32 ; 58 ; 72) et le support (8 ; 31 ; 57) sont reliés fermement au module d'airbag.

35. Module d'airbag selon l'une des revendications 31 à 34, **caractérisé en ce que** le réservoir de produit réfrigérant (9 ; 32 ; 58 ; 72) et le support (8 ; 31 ; 57) sont réalisés de telle façon qu'ils peuvent être intégrés sans déformation dans des modules d'airbag de conformations différentes, comme par exemple un module d'airbag pour conducteur ou un module d'airbag pour passager.

36. Module d'airbag selon l'une des revendications 31 à 35, **caractérisé en ce que** le support (8 ; 31 ; 57) est agencé entre l'ouverture de sortie (6 ; 26a) du porte générateur de gaz (4, 24) respectivement le côté au fond du module d'airbag (50) et le réservoir de produit réfrigérant (9 ; 32 ; 58 ; 72).

37. Module d'airbag selon l'une des revendications 31 à 36, **caractérisé en ce que** le support (8 ; 31 ; 57) est réalisé de telle façon qu'il possède au moins une traversée (10 ; 33 ; 73) pour le gaz à évacuer.

38. Module d'airbag selon la revendication 37, **caractérisé en ce que** le support (8 ; 31 ; 57) est positionné dans le module d'airbag (1 ; 21 ; 50) de telle façon que la traversée (10 ; 33 ; 73) du support est en alignement avec l'ouverture de sortie du module d'airbag.

39. Module d'airbag selon l'une des revendications précédentes, **caractérisé en ce qu'**il comprend une plaque adaptatrice (13 ; 39), laquelle est reliée fermement au module d'airbag (1 ; 21).

40. Module d'airbag selon l'une des revendications 31 à 38 et la revendication 39, **caractérisé en ce que** la plaque adaptatrice (13 ; 39) fixe le réservoir de produit réfrigérant (9 ; 32 ; 58 ; 72) et le support (8 ; 31 ; 57) sur leurs faces extérieures.

41. Module d'airbag selon la revendication 39 ou 40, **caractérisé en ce que** la plaque adaptatrice (13 ; 39) est réalisée et prévue pour l'agencement du module d'airbag (1 ; 21) sur un véhicule automobile.
